# EUROPEAN PATENT SPECIFICATION

(11) **EP 0 486 285 B1**
(45) Date of publication and mention of the grant of the patent: **14.10.1998**
(21) Application number: 91310482.4
(22) Date of filing: 13.11.1991
(51) Int. Cl.: F23D 14/22, F23D 14/32, F23C 7/00

(54) **Burners**
Brenner
Brûleurs

(30) Priority: 14.11.1990 GB 9024786
(43) Date of publication of application: 20.05.1992
(73) Proprietor: The BOC Group plc, Windlesham Surrey GU20 6HJ (GB)
(72) Inventor: Watson, Richard William, Ilkley, West Yorkshire, LS29 9BX (GB)
(74) Representative: Wickham, Michael

(56) References cited:
- DE-A- 2 339 563
- GB-A- 232 532

## Description

This invention relates to burners, particularly those in which separate streams of oxygen and air are used to support combustion of a fuel. The burner is typically arranged so that the air provides cooling as well.

One well known kind of oxygen-gas-air burner comprises a central passage for oxygen surrounded by an inner, annular passage for the fuel, and an outer, annular, passage for the air. The distal end of each passage terminates at an end plate. The end plate is formed with a first ring of orifices that co-operate with the outer annular passage, a second ring of orifices that co-operate with the inner annular passage and a third group of orifices that co-operate with the central passage. The central passage is typically used for the supply of oxygen. In order to ensure that there is good mixing of oxygen with fuel, the third group of orifices are so designed that provided the oxygen velocity is sufficient the oxygen exits as turbulent jets which readily mix with the other fluids. The end plate is typically a complex and expensive part to manufacture. Since the end of the burner is typically subject to hostile conditions, coming into contact with hot and frequently corrosive atmospheres, it is desirable to make the end plate of a hard metal alloy. This again adds to the cost of the end plate and hence the burner. Even though a hard metal alloy is used, the burner may have a relatively short life if used in particularly severe conditions.

DE-A-2 339 563 discloses a burner which employs oxygen (rather than) air to support the combustion of a fuel gas such as propane. The burner has a housing within which are located a bundle of individual burners, each comprising a pair of concentric pipes. The outer pipes pass through an aperture in a wall of a chamber to which gas is passed. The individual burners are all inclined at an angle to the longitudinal axis of the housing.

It is an aim of the present invention to provide an oxygen-air-fuel burner which does not employ such an end plate and is particularly simple to fabricate.

An oxygen fuel gas burner comprising an elongate, tubular, body member having an open distal end and defining a passage through which extend a plurality of first elongate, open-ended, tubular members able to conduct fluid therealong, and a plurality of second, elongate open-ended tubular members able to conduct fluid therealong, wherein each first tubular member has a respective second tubular member extending through it, the proximal end of each first tubular member communicates with a first fluid distribution chamber, the proximal end of each second tubular member communicates with a second fluid distribution chamber, the body member has a back plate and an inlet which is able to be placed in communication with a source of air and which communicates with said passage, the first and second tubular members each have a distal end that communicates directly with the burner flame in use of the burner, the first distribution chamber is able to be placed in communication with one of a source of fuel gas and a source of oxygen or oxygen-enriched air, and the second distribution chamber is able to be placed in communication with the other of the said sources, characterised in that the axis of each first and each second tubular member extends parallel to the axis of the body member (if it does not coincide therewith), the first and second tubular members are each fastened only at their proximal end, the proximal end of the body member is closed by the back plate, and the proximal ends of the first tubular members are each fastened to the back plate.

By employing such an arrangement of second tubular members within first tubular members, and employing the first tubular members to supply fuel and the second tubular members to supply oxygen (or oxygen-enriched air), or vice versa, intimate mixing of an oxygen stream with a fuel stream can be provided in the flame zone of the burner even though there is no end plate with passages. Accordingly, the burner according to the invention is particularly simple to construct.

The back plate preferably forms a wall of a first chamber which acts as the first distributor. The opposite wall is preferably shared with a second chamber which acts as the second distributor. Each chamber preferably has an inlet connectable to a source of a chosen fluid.

The second tubular members are similarly preferably each fastened to the common wall of the first and second chambers, and co-operate with a respective orifice therethrough. If desired, further support may be provided for the first and second tubular members, for example by the use of spiders or longitudinally-extending fins. Such fins also facilitate dissipation of heat from the distal end of the burner.

The burner according to the invention offers several significant advantages over the known kind of burner previously described herein. First, the use of an end plate of the kind previously mentioned at the distal end of the burner is avoided. Second, the burner tubes may be fabricated from relatively inexpensive materials, for example, stainless steel. Third, fabrication is particularly simple, there being no oblique orifices to drill in any end plate. Fourth, the burner is able to cope with forces caused by thermal expansion and contraction since the first and second tubular members are typically secured only at their proximal ends and have free distal ends.

Another significant set of advantages arises out of the fact that the juxtaposition of the first and second tubular members relative to each other and to the body member enables particularly good mixing of the fluids to take place without the need to employ high fluid velocities. In particular, the burner is capable of producing any of a large number of different flame shape and heat release patterns depending on the number of first and second tubular members that are employed and their respective diameters. By using a relatively large number of first and second tubular members (say, from 10 to 20 each) it may be possible to produce relatively short flames. In addition, provided sufficient air flow is maintained for the purposes of cooling the burner, it is possible to select the relative rates of supply of oxygen, typically to the second distributor, and air, typically to the inlet to the body member, from a wide range of values.
Accordingly, the flame temperature may be selected from a wide range of temperatures depending on the choice of fuel. This set of advantages makes the burner particularly suitable for burning a gas mixture comprising hydrogen sulphide in a furnace where there is a refractory lining which is liable to be damaged by excessive flame temperature or by impingement of the flame envelope upon the lining itself. When burning an acid gas mixture including hydrogen sulphide, or indeed a gaseous hydrocarbon fuel, we prefer to supply the oxygen (or oxygen-enriched air) to the second tubular members, and the fuel to the first tubular members, with the air being supplied to the inlet to the body member.

The burner according to the invention will now be described by way of example with reference to the accompanying drawings, in which:

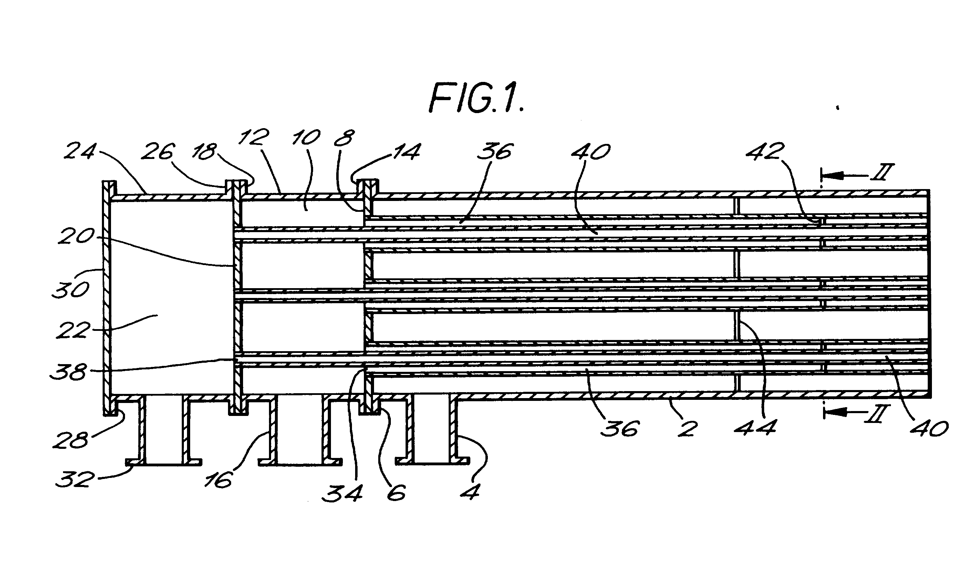

Figure 1 is a longitudinal elevation, partly in section, of the burner; and
Figure 2 is a cross-section through the line II-II in Figure 1.

The drawings are not to scale.

Referring to the drawings, the illustrated burner comprises an elongate tubular body member 2 having an inlet 4 connectable to a supply of compressed air (not shown). The body member 2 is formed with a flange 6 at its proximal end. The flange 6 is secured fluid-tight to a back plate 8. The back plate 8 also forms one wall of a first generally cylindrical gas distribution chamber 10 comprising a main tubular body member 12 and engages a flange 14 integral with the body member 12. Typically, the back plate 8 is bolted to the flange 14 and a fluid tight seal is made by gasket (not shown) engaged therebetween. The body member 12 also has formed integral therewith an inlet 16 connectable to a source of gaseous fuel. The body member 12 has a second flange 18 opposite the flange 14 by which it is joined to a plate 20 which defines a common wall between the chamber 10 and a second gas distribution chamber 22. Typically the plate 20 is secured to the flange 18 by bolts (not shown) and a fluid tight seal is made by a gasket (not shown) engaged between the plate 20 and the flange 18.

The chamber 22 comprises a generally tubular body member 24 having at its ends integral with flanges 26 and 28. The flange 26 is joined to the plate 20 by means of bolts (not shown). A fluid-tight seal is made by a gasket (not shown) engaged between the plate 20 and the flange 26. The flange 28 is joined to a closure 30 by means of bolts (not shown). A fluid-tight seal is made by a gasket (not shown) engaged between the closure 30 and the flange 28. The body member 24 of the second gas distribution chamber 22 is provided with an inlet 32 connectable to a source of oxygen (not shown).

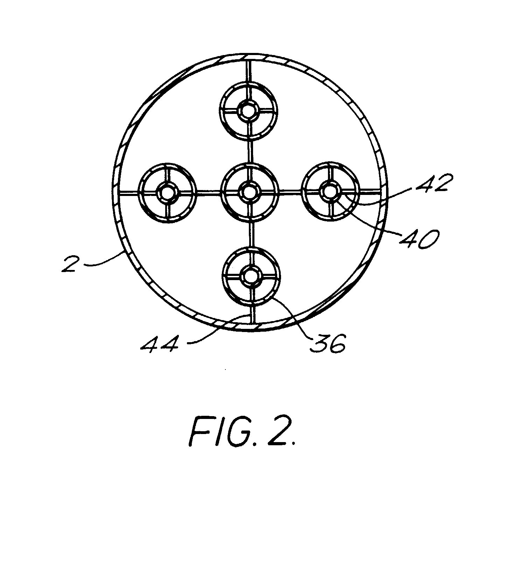

The back plate 8 has formed therein a plurality of orifices 34. The orifices 34 each communicate with respective distal ends of first tubular members 36 whose longitudinal axes are parallel to one another and to the longitudinal axis of the body member 2. (One of the tubular members 36 may have its axis coincident with that of the body member 2 as shown in Figure 2.) The proximal ends of the tubular members 36 are welded or otherwise fastened to the back plate 8. The distal ends of the tubular members 36 terminate in the same plane as the distal end of the body member 2. Each tubular member 36 communicates with the first gas distribution chamber 10 through a respective orifice 34.

The plate 20 has a plurality of orifices 38 formed therethrough. The burner is provided with a plurality of second elongate tubular members 40. The proximal ends of the tubular members 40, are each welded or otherwise fastened to the plate 20 such that each proximal end communicates with a respective orifice 38. Accordingly, gas is able to pass from the second distributor chamber 22 into the second tubular members 40.

There are equal numbers of first tubular members 36 and second tubular members 40. Each second tubular member 40 extends from its proximal end into and through a corresponding tubular member 36 and is coaxial therewith. The number of first tubular members is thus equal to the number of second tubular members 40. The distal ends of the tubular members 40 terminate in the same plane as the distal ends of the tubular members 36 and the distal end of the body members 2.

It is to be appreciated that the tubular members 36 are not secured to any plate or like member at their distal ends. In order to provide support for the tubular members 40, each may be provided with a spider 42 joined thereto. Each spider 42 makes a frictional engagement with the inner surface of a respective first tubular member 36. Analogously, the first tubular members 36 are provided with spiders 44 joined thereto, the ends of each spider 44 making frictional engagement with either the inner surface of the body member 2 or the outer surface of another first tubular member 36. Instead of spiders, the first and second tubular members 36 and 40 may be provided with longitudinal fins (not shown) that serve to locate these members within the body member 2 and also enhance the conduction of heat away from the distal end of the burner. Instead of providing the outer surface of each tubular member 36 with such fins, the inner surface of the body member 2 may be provided with longitudinally extending fins.

Typically, all the parts of the illustrated burner are fabricated from steel. There is no communication between the first gas distributor chamber 10 and the second gas distributor chamber 22 or between the first gas distributor chamber 10 and the free space defined by the body member 2, which space is used to conduct air or other gas to the distal end of the burner.

In operation, the inlet 4 is connected to a supply of air, the inlet 16 to a supply of fuel gas and the inlet 32 to a supply of commercially pure oxygen or oxygen-enriched air. The air flows to the distal end of the body member 2 through the free space therein; the fuel gas through the first tubular members 36 and the oxygen through the second tubular members 40. The introduction of each fluid into the burner may be tangential so as to promote good distribution of fluid and to avoid short circuiting. Alternatively, or in addition, baffles (not shown) may be provided for this purpose. The gases become mixed on leaving the distal end of the burner. A stable flame can thus be created by igniting the resulting mixture. The provision of each oxygen tube within a respective fuel gas tube makes possible the achievement of a particularly good mixing of the oxygen and the fuel even though no end plate is provided. Indeed, we believe that this result can be achieved without using exceptionally high oxygen and fuel velocities. Moreover, we believe that good mixing and relatively stable flames can be achieved with remarkably low flow velocities. For example, the oxygen flow velocity may be less than 50 metres/second, and the flow of fluids through the burner may approach laminar conditions when a large number of first and second tubular members (eg 20 of each) are employed.

The shape and extent of the flame depends in part on the number of first and second tubular members that are employed. As shown in Figure 2 of the drawings, five first tubular members 36 and five second tubular members 40 may be used. It is to be appreciated, however, that the numbers of such tubular members may vary widely, and if it is desired to produce short flames, more first tubular members 36 and second tubular members 40 will be provided.

Another feature of the burner according to the invention is that it is capable of tolerating some erosion of its distal end provided that the distal end of the shell or body member 2 erodes at an equal rate to that of the distal ends of the tubes 36 and 40.

## Claims

1. An oxygen-fuel burner comprising an elongate tubular, body member (2) having an open distal end and defining a passage through which extend a plurality of first elongate, open-ended, tubular members (36) able to conduct fluid therealong, and a plurality of second, elongate, open-ended tubular members (40) able to conduct fluid therealong, wherein each first tubular member (36) has a respective second tubular member (40) extending through it, the proximal end of each first tubular member (36) communicates with a first fluid distribution chamber (10), the proximal end of each second tubular member (40) communicates with a second fluid distribution chamber (22), the body member has a back plate (8) and an inlet (4) which is able to be placed in communication with a source of air and which communicates with said passage, the first and second tubular members (36 and 40) each have a distal end that communicates directly with the burner flame in use of the burner, the first distribution chamber (10) is able to be placed in communication with one of a source of fuel gas and a source of oxygen or oxygen-enriched air, and the second distribution chamber (22) is able to be placed in communication with the other of the said sources, characterised in that the axis of each first and each second tubular member (36 and 40) extends parallel to the axis of the body member (2) (if it does not coincide therewith), the first and second tubular members (36 and 40) are each fastened only at their proximal end, the proximal end of the body member (2) is closed by the back plate (8), and the proximal ends of the first tubular members are each fastened to the back plate (8).

2. A burner as claimed in claim 1, additionally characterised in that the distal ends of the first and second tubular members (36 and 40) and the body member (2) all terminate in a common plane.

3. A burner as claimed in claim 1 or claim 2, in which the back plate (8) also forms a wall of the first distribution chamber (10).

4. A burner as claimed in claim 3, in which an opposite wall (20) of the first distribution chamber (10) to the said back plate (8) is shared with the second distribution chamber (22).

5. A burner as claimed in claim 4, in which the said second tubular members (40) are fastened to said opposite wall (20).

## Patentansprüche

1. Sauerstoff-Kraftstoff-Brenner, umfassend: ein längliches rohrförmiges Körperelement (2), das ein offenes distales Ende aufweist und einen Durchgang definiert, durch den sich eine Vielzahl von ersten länglichen offenendigen rohrförmigen Elementen (36) erstreckt, die Fluid daran entlang führen können, und eine Vielzahl von zweiten länglichen offenendigen rohrförmigen Elementen (40), die Fluid daran entlang führen können, wobei jedes erste rohrförmige Element (36) ein sich durch dieses erstreckendes jeweiliges zweites rohrförmiges Element (40) aufweist, das proximale Ende jedes ersten rohrförmigen Elementes (36) mit einer ersten Fluidverteilungskammer (10) in Verbindung steht, das proximale Ende jedes zweiten rohrförmigen Elementes (40) mit einer zweiten Fluidverteilungskammer (22) in Verbindung steht, das Körperelement eine Rückwand (8) und einen Einlaß (4) aufweist, der in Verbindung mit einer Luftquelle angeordnet werden kann und der mit dem Durchgang in Verbindung steht, die ersten und zweiten rohrförmigen Elemente (36 und 40) jeweils ein distales Ende aufweisen, das beim Gebrauch des Brenners direkt mit der Brennerflamme in Verbindung steht, die erste Verteilungskammer (10) in Verbindung mit einer von einer Kraftstoffgasquelle und einer Quelle an Sauerstoff oder sauerstoffangereicherter Luft angeordnet werden kann, und die zweite Verteilungskammer (22) in Verbindung mit der anderen der Quellen angeordnet werden kann, dadurch gekennzeichnet, daß sich die Achse jedes ersten und jedes zweiten rohrförmigen Elementes (36 und 40) parallel zu der Achse des Körperelementes (2) erstreckt (wenn sie mit dieser nicht übereinstimmen), die ersten und zweiten rohrförmigen Elemente (36 und 40) jeweils nur an ihrem proximalen Ende befestigt sind, das proximale Ende des Körperelementes (2) durch die Rückwand (8) geschlossen ist und die proximalen Enden der ersten rohrförmigen Elemente jeweils an der Rückwand (8) befestigt sind.

2. Brenner nach Anspruch 1,
zusätzlich dadurch gekennzeichnet,
daß die distalen Enden der ersten und zweiten rohrförmigen Elemente (36 und 40) und des Körperelementes (2) alle in einer gemeinsamen Ebene enden.

3. Brenner nach Anspruch 1 oder Anspruch 2,
wobei die Rückwand (8) auch eine Wand der ersten Verteilungskammer (10) bildet.

4. Brenner nach Anspruch 3,
wobei eine Wand (20) der ersten Verteilungskammer (10) gegenüberliegend zu der Rückwand (8) einen Teil der zweiten Verteilungskammer (22) bildet.

5. Brenner nach Anspruch 4,
wobei die zweiten rohrförmigen Elemente (40) an der gegenüberliegenden Wand (20) befestigt sind.

## Revendications

1. Brûleur oxygène-gaz combustible comprenant un corps tubulaire allongé (2) ayant une extrémité distale ouverte et définissant un passage à travers lequel s'étendent une pluralité de premiers éléments tubulaires allongés (36) à extrémité ouverte, aptes à faire passer un fluide, et une pluralité de seconds éléments tubulaires allongés (40) à extrémité ouverte, aptes à faire passer un fluide, dans lequel chaque premier élément tubulaire (36) a un second élément tubulaire (40) respectif qui s'étend à travers lui, l'extrémité proximale de chaque premier élément tubulaire (36) communique avec une première chambre (10) de distribution des fluides, l'extrémité proximale de chaque second élément tubulaire (40) communique avec une seconde chambre (22) de distribution des fluides, le corps possède une plaque arrière (8) et une entrée (4) qui est apte à être placée en communication avec une source d'air et qui communique avec ledit passage, les premiers et seconds éléments tubulaires (36 et 40) ont chacun une extrémité distale qui communique directement avec la flamme du brûleur lors de l'utilisation du brûleur, la première chambre (10) de distribution est apte à être placée en communication avec l'une d'entre une source de gaz combustible et une source d'oxygène ou d'air enrichi en oxygène, et la seconde chambre (22) de distribution est apte à être placée en communication avec l'autre desdites sources, ***caractérisé en ce que*** l'axe de chaque premier et second élément tubulaire (36 et 40) s'étend parallèlement à l'axe du corps (2) (s'il ne coïncide pas avec lui), les premiers et seconds éléments tubulaires (36 et 40) sont chacun fixés seulement au niveau de leur extrémité proximale, l'extrémité proximale du corps (2) est fermée par la plaque arrière (8), et les extrémités proximales des premiers éléments tubulaires sont chacune fixées à la plaque arrière (8).

2. Brûleur selon la Revendication 1, ***caractérisé*** additionnellement ***en ce que*** les extrémités distales des premiers et seconds éléments tubulaire (36 et 40) et du corps (2) se terminent dans un plan commun.

3. Brûleur selon la Revendication 1 ou la Revendication 2, dans lequel la plaque arrière (8) forme aussi une paroi de la première chambre (10) de distribution.

4. Brûleur selon la Revendication 3, dans lequel une paroi (20) de la première chambre (10) de distribution opposée à ladite plaque arrière (8) est commune à la seconde chambre (22) de distribution.

5. Brûleur selon la Revendication 4, dans lequel lesdits seconds éléments tubulaires (40) sont fixés à ladite paroi opposée (20).
